# EUROPÄISCHE PATENTANMELDUNG

(11) **EP 0 744 574 A1**
(43) Veröffentlichungstag der Anmeldung: **27.11.1996**
(21) Anmeldenummer: 96105473.1
(22) Anmeldetag: 04.04.1996
(51) Int. Cl.: F16L 59/02, F16L 59/16

(54) **Isolierteil**

(30) Priorität: 26.05.1995 DE 19519457
(71) Anmelder: ARMSTRONG WORLD INDUSTRIES GmbH, D-48153 Münster (DE)
(72) Erfinder: Karl, Reinhard, 88171 Weiler (DE); Perner, Reinhold, 87448 Waltenhofen (DE); Czwikla, Bernd, 88317 Aichstetten (DE)
(74) Vertreter: Finck, Dieter, Dr.Ing.

(57) **Zusammenfassung**

Das Isolierteil zur außenseitigen Wärme- bzw. Kälteisolierung von Rohrteilen, wie Rohrkrümmern, T-Stücken, Ventilstücken und dergleichen, besteht aus wenigstens zwei schalenförmigen Elementen (11), die längs planer Flächen unter Bildung eines inneren, der Erstreckung des Rohrteils angepaßten Kanals aufeinanderlegbar und aufeinander fixierbar sind. Es hat in den inneren Kanal (12) vorstehende elastisch oder plastisch verformbare oder ausbrechbare Rippen (13), die unverformt oder nicht ausgebrochen einen minimalen Aufnahmeraum des inneren Kanals (12) und voll verformt bzw. voll ausgebrochen einen maximalen Aufnahmeraum des inneren Kanals (12) begrenzen.

## Beschreibung

Die Erfindung betrifft ein Isolierteil zur außenseitigen Wärme- bzw. Kälteisolierung von Rohrteilen, wie Rohrkrümmern, T-Stücken, Ventilstücken und dergleichen, bestehend aus wenigstens zwei schalenförmigen Elementen, die längs planer Flächen unter Bildung eines inneren, der Erstreckung des Rohrteils angepaßten Kanals aufeinanderlegbar und aufeinander fixierbar sind.

Solche, zum Stand der Technik gehörende, gewöhnlich aus festeren Isolierschäumen hergestellte Isolierteile müssen jeweils gesondert für den jeweiligen Biegeradius und den Außendurchmesser des Rohrteils hergestellt und gelagert werden, was hinsichtlich des einzusetzenden Materials und der Lagerhaltung sehr aufwendig ist. Außerdem erfordern Wülste und Anformungen an den zu isolierenden Rohrteilen zeitaufwendige Nachbearbeitungen der schalenförmigen Elemente.

Um dies zu vermeiden verwendet man in solchen Fällen schalenförmige Elemente, die einen inneren Kanal mit einer größeren als der erforderlichen Abmessung bilden, was jedoch den Nachteil hat, daß die Fixierung und Zentrierung des eingesetzten Rohrteils unzureichend ist. In vielen Fällen führt dies auch zu einer verhältnismäßig starken Reduzierung der isolierenden Dämmschicht.

Die der Erfindung zugrunde liegende Aufgabe besteht nun darin, die Isolierteile der eingangs genannten Art so auszugestalten, daß ein und dasselbe Isolierteil jeweils für einen größeren Bereich von Durchmessern der Rohrteile und Anformungen daran einsetzbar ist.

Diese Aufgabe wird ausgehend von dem Isolierteil der eingangs genannten Art durch in den inneren Kanal vorstehende, elastisch oder plastisch verformbare oder ausbrechbare Rippen gelöst, die unverformt oder nicht ausgebrochen einen minimalen Aufnahmeraum des inneren Kanals und voll verformt bzw. voll ausgebrochen einen maximalen Aufnahmeraum des inneren Kanals begrenzen.

Dabei können die Rippen ganz oder teilweise radial, ganz oder teilweise parallel zueinander oder in einer angepaßten Kombination beider Ausrichtungen angeordnet sein.

Das erfindungsgemäß ausgestaltete Isolierteil läßt durch entsprechendes Verformen oder Ausbrechen der Rippen bei der Montage eine Anpassung an einen vorgegebenen Durchmesserbereich von Rohrteilen und eine Konturangleichung zu, wobei eventuell vorhandene freie Räume von dem verformten bzw. ausgebrochenen Material zum Teil wieder gefüllt werden, was die Dämmwirkung begünstigt. Dabei kann der Abstand der Freiräume zwischen den Rippen so gewählt werden, daß ihr Verformen bzw. Abbrechen gewährleistet bleibt, ohne jedoch die Dämmwirkung verhältnismäßig stark zu reduzieren.

Anhand von Zeichnungen werden Ausführungsbeispiele der Erfindung näher erläutert. Es zeigt
- Fig. 1: eine Draufsicht auf eine Halbschale eines Isolierteils gesehen in Richtung des Pfeils A von Fig. 2,
- Fig. 2: eine Seitenansicht der Halbschale des Isolierteils gesehen in Richtung des Pfeils B von Fig. 1,
- Fig. 3: schematisch im Längsschnitt eine Halbschale eines Isolierteils für ein T-Stück, ein Geradsitzventil oder andere 90°-Ventile und
- Fig. 4: schematisch im Längsschnitt eine Halbschale eines Isolierteils für ein Abzweig-, ein Schrägsitzventil oder andere unter einem bestimmten Winkel stehende Ventile.

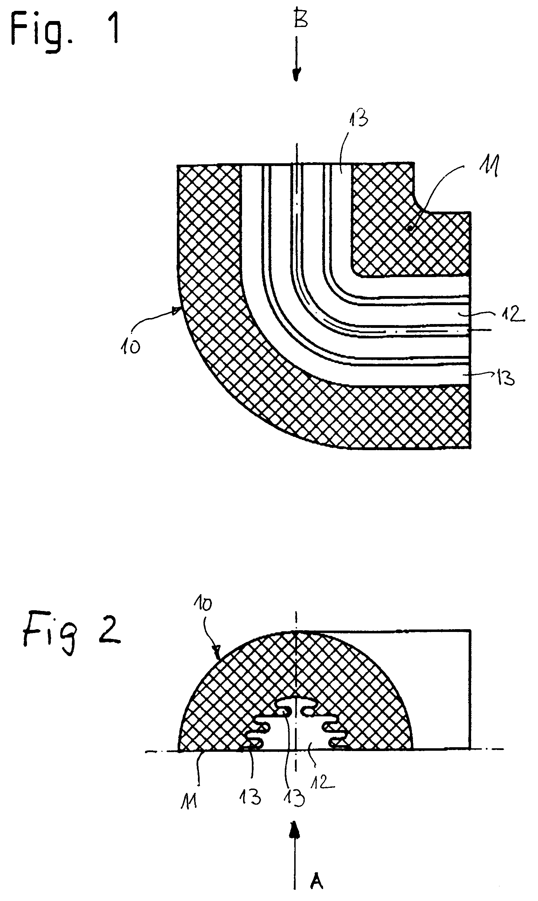

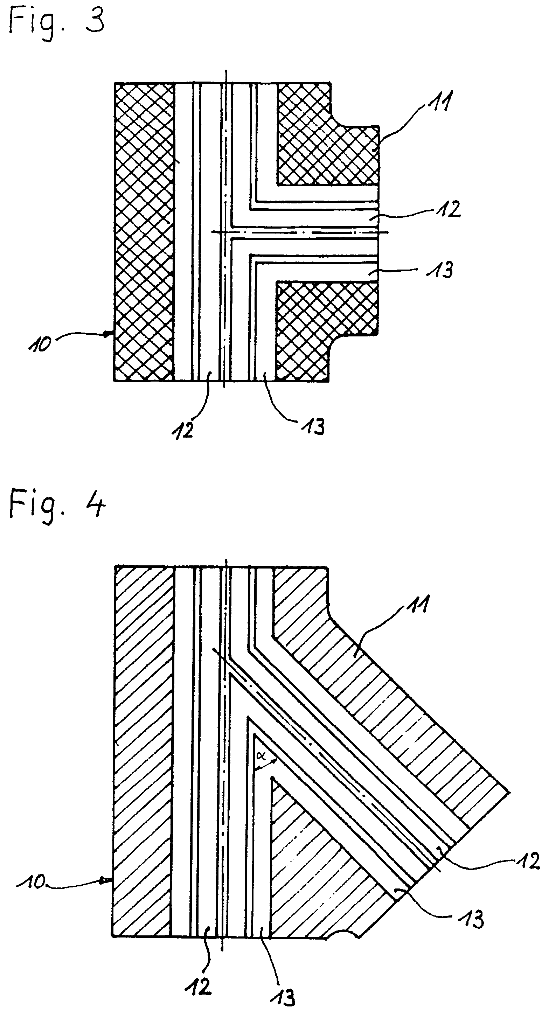

Bei einer ersten Ausführungsform eines Isolierteils sind die schalenförmigen Elemente zwei Halbschalen, von denen in Fig. 1 und 2 nur die eine Halbschale 10 gezeigt ist. Die Halbschalen 10 werden längs planer Flächen 11 aufeinander gelegt und aneinander fixiert. Das in Fig. 1 und 2 gezeigte Formteil dient zur Isolierung eines Rohrkrümmers, wobei der Dämmstoff des Isolierteils in der Regel ein Schaummaterial ist.

In jeder Halbschale 10 ist ein innerer halber Kanal 12 so ausgebildet, daß er sich bezüglich des Dämmaterials im wesentlichen zentral erstreckt. In das Innere eines jeden halben Kanals 12 ragen von dem Dämmstoffmaterial parallel zueinander angeordnete Rippen 13 vor. Wenn alle Rippen entfernt oder in eine bestimmte Richtung umgebogen sind, hat jeder innere Kanal 12 einen maximalen Durchmesser für die Aufnahme eines Rohrkrümmers mit maximalem Außendurchmesser. Bei dem in Fig. 1 und 2 gezeigten Zustand sind die Rippen 13 unverformt und begrenzen zwischen sich einen halben Kanal 12 mit minimalem Innendurchmesser für die Aufnahme eines Rohrkrümmers mit einem minimalen Außendurchmesser.

Das Isolierteil kann für jeden Rohrkrümmer mit einem Außendurchmesser und Bogenradius eingesetzt werden, der zwischen dem erwähnten minimalen und maximalen Außendurchmesser liegt. Die Rippen 13 werden für die Aufnahme des Rohrkrümmers, wenn es sich um starres Dämmaterial handelt entsprechend ausgebrochen oder, wenn es sich um elastisch oder plastisch verformbares Dämmaterial handelt, entsprechend verformt. In gleicher Weise können Anformungen am Rohrteil oder Ventilteil im Aufnahmeraum des inneren Kanals 12 aufgenommen werden. Ferner lassen sich Bogen und Winkel mit unterschiedlichen Biegeradien, auch abweichend zum Isolierradius, mit dem Isolierteil isolieren.

Anstelle der parallelen Anordnung der Rippen 13 in Fig. 1 und 2 können die Rippen auch radial in den inneren Kanal 12 ragend angeordnet werden. Es können auch andere Rippenanordnungen verwendet werden, solange deren Ausformung möglich ist und die Beziehung zwischen dem minimalen und maximalen Aufnahmeraum des inneren Kanals 12 gewährleistet ist.

Eine zweite Ausführungsform eines Isolierteils kann zum Isolieren von Rohrteilen in Form eines T-Stücks verwendet werden. In Fig. 3 ist die eine Halbschale 10 des dafür verwendeten Isolierteils gezeigt. Die Halbschale 10 hat einen inneren Kanal mit zwei senkrecht ineinander übergehenden Aufnahmeräumen 12. In den Aufnahmeräumen 12 sind wie bei der ersten Ausführungsform Rippen 13 von der Wand des inneren Kanals in die Aufnahmeräume 12 vorstehend ausgebildet. Die einander zugeordneten Rippen 13 treffen jeweils senkrecht aufeinander. Die Halbschale 10 hat plane Flächen 11 zur Fixierung auf den planen Flächen der anderen nicht gezeigten Halbschale.

Eine dritte Ausführungsform des Isolierteils dient zum Isolieren eines Schrägsitzventils. In Fig. 4 ist eine Halbschale 10 eines solchen Isolierteils gezeigt. Die Halbschale 10 hat einen inneren Kanal mit zwei Aufnahmeräumen 12, die, gesehen von der einen Seite unter einem spitzen Winkel, ineinander übergehen. In den Aufnahmeräumen 12 sind jeweils wieder von der Wand des inneren Kanals der Halbschale 10 radial oder parallel zueinander vorstehende Rippen 13 ausgeformt. Die einander zugeordneten Rippen 13 treffen in einem spitzen Winkel α oder mit dessen Komplementärwinkel aufeinander.

## Patentansprüche

1. Isolierteil zur außenseitigen Wärme- bzw. Kälteisolierung von Rohrteilen, wie Rohrkrümmern, T-Stücken, Ventilstücken und dergleichen, bestehend aus wenigstens zwei schalenförmigen Elementen, die längs planer Flächen unter Bildung eines inneren, der Erstreckung des Rohrteils angepaßten Kanals aufeinanderlegbar und aufeinander fixierbar sind, gekennzeichnet durch in den inneren Kanal (12) vorstehende elastisch oder plastisch verformbare oder ausbrechbare Rippen (13), die unverformt oder nicht ausgebrochen einen minimalen Aufnahmeraum des inneren Kanals (12) und voll verformt bzw. voll ausgebrochen einen maximalen Aufnahmeraum des inneren Kanals (12) begrenzen.

2. Isolierteil nach Anspruch 1, dadurch gekennzeichnet, daß die Rippen (13) ganz oder teilweise parallel zueinander angeordnet sind.

3. Isolierteil nach Anspruch 1 oder 2, dadurch gekennzeichnet, daß die Rippen ganz oder teilweise radial angeordnet sind.
